# EUROPEAN PATENT SPECIFICATION

(11) **EP 4 574 641 B1**
(45) Date of publication and mention of the grant of the patent: **18.02.2026**
(21) Application number: 23218497.8
(22) Date of filing: 20.12.2023
(51) Int. Cl.: B63H 5/10, B63H 23/02, F16H 1/28

(54) **A MARINE PROPULSION UNIT COMPRISING A DOUBLE-PINION PLANETARY GEAR**
SCHIFFSANTRIEBSEINHEIT MIT EINEM DOPPELRITZEL-PLANETENGETRIEBE
UNITÉ DE PROPULSION MARINE COMPRENANT UN ENGRENAGE PLANÉTAIRE À DOUBLE PIGNON

(43) Date of publication of application: 25.06.2025
(73) Proprietor: Volvo Penta Corporation, 405 08 Göteborg (SE)
(72) Inventor: TELL, Johan, 417 26 GÖTEBORG (SE); WIK, Lars, 433 62 SÄVEDALEN (SE); BRAUER, Samuel, 418 73 GÖTEBORG (SE)
(74) Representative: Ström & Gulliksson AB

(56) References cited:
- JP-U- H0 360 498
- US-A- 4 963 108
- US-B2- 8 047 885
- US-B2- 9 216 804

## Description

### TECHNICAL FIELD

The disclosure relates generally to marine propulsion. In particular aspects, the disclosure relates to a marine propeller propulsion unit comprising a double-pinion planetary gear. The disclosure can be applied to marine vessels, such as water crafts, motorboats, work boats, sport vessels, sailboats, boats, ships, among other vessel types. Although the disclosure may be described with respect to a particular vessel, the disclosure is not restricted to any particular vessel.

### BACKGROUND

Marine propulsion units are used to propel marine vessels in water. Some marine propulsion units comprise one or more propellers. In some examples, two concentric propellers may be arranged to rotate in opposite directions. The latter solution brings a number of benefits as regards efficiency, maneuverability and acceleration.

US 4 963 108 A shows an example of a marine contra-rotating propeller system comprising a large gear driven by an engine, and small gears disposed to respectively mesh with the large gear at fixed positions along the circumference of the large gear. Planet gears are respectively mounted to the gear shafts of the small gears. A sun gear and an inner-toothed e gear are respectively meshed with the planet gears. A rear propeller is mounted to an inner shaft serving as a gear shaft of the sun gear. A front propeller is mounted to a tubular outer shaft serving as a gear shaft of the inner-toothed gear. US 8 047 885 B2 shows an other example of a marine propulsion unit.

Although many prior art solutions function satisfactorily, there is still room for improvement in terms of for example efficiency, performance, lifetime and costs.

### SUMMARY

According to a first aspect of the disclosure, there is provided a marine propeller propulsion unit comprising a double-pinion planetary gear for driving a front and a rear propeller by means of an input shaft. A sun gear is adapted to be connected to the input shaft, a ring gear is adapted to be connected to the front propeller, and a planet carrier is adapted to be connected to the rear propeller.

The first aspect of the disclosure may seek to solve the problem of providing an improved marine propeller propulsion unit. Improvements may concern e.g. one or more of energy efficiency, performance, lifetime and costs. The use of a planetary gear in this context is advantageous as the high gear ratio that is obtainable allows the propellers to be powered, via the input shaft, by a high-speed motor. A motor, and an input shaft, rotating at high speed may generate and transfer large power while the size and weight can be kept relatively low. Thereby, housings, such as e.g. a drive leg or other housings, enclosing the input shaft and the planetary gear may be compact, which is advantageous for reducing appendage drag. A planetary gear further readily provides for rotating coaxial propellers in opposite directions. In some applications, the efficiency may be yet further improved by providing a higher torque to the front propeller than to the rear propeller, and such a torque ratio may be obtained by means of the double-pinion planetary gear.

Optionally in some examples, including in at least one preferred example, the sun gear is directly connected to the input shaft such that the sun gear and the input shaft are adapted to rotate at the same velocity. Even though the present disclosure does not exclude a gearing operatively arranged between the sun gear and the input shaft to increase or decrease the speed of the sun gear, a technical benefit of the present disclosure may include that no such gearing is required.

Optionally in some examples, including in at least one preferred example, the marine propeller propulsion unit comprises a propulsion motor for driving the input shaft. A technical benefit may include that the propulsion motor may be tailored to the double-pinion planetary gear and other components of the marine propeller propulsion unit.

Optionally in some examples, including in at least one preferred example, the propulsion motor is an electric motor. Apart from environmental benefits resulting from increased efficiency and improved performance as a result of a quick torque response, an electric motor may be particularly compact and positioned next to the double-pinion planetary gear. Thus, the marine propeller propulsion unit may be compact. The, marine propeller propulsion unit may comprise one single propulsion motor.

Optionally in some examples, including in at least one preferred example, the propulsion motor is directly connected to the input shaft such that the propulsion motor and the input shaft are adapted to rotate at the same velocity. Even though the present disclosure does not exclude a gearing operatively arranged between the propulsion motor and the input shaft to increase or decrease the speed of the input shaft, a technical benefit of the present disclosure may include that no such gearing is required. The propulsion motor may be coaxial with the front and rear propellers, even though the present disclosure does not exclude an angle gear or similar being arranged between the propulsion motor and the propellers. The propulsion motor may be arranged at essentially or exactly the same vertical level as the front and rear propellers during operation.

Optionally in some examples, including in at least one preferred example, the propulsion motor and the double-pinion planetary gear are of approximately the same outer dimension. A technical benefit may include reduced appendage drag. The propulsion motor and the double-pinion planetary gear may be of a nearly circular outer shape, and their outer radiuses may be approximately the same or differ by up to 30 percent. A radius difference of up 30 percent may in the present context may be referred to as approximately the same. Optionally in some examples, including in at least one preferred example, the outer dimensions differ by less than 5 percent, less than 10 percent, or less than 20 percent.

Optionally in some examples, including in at least one preferred example, the marine propeller propulsion unit comprises a housing for enclosing the propulsion motor and the double-pinion planetary gear. Optionally in some examples, including in at least one preferred example, the marine propeller propulsion unit is configured such that the housing at least during operation is completely submerged under water. The marine propeller propulsion unit may form a pod arranged outside a hull of a marine vessel that is driven by the marine propeller propulsion unit. Such a marine propeller propulsion unit may be referred to as an azimuth thruster. The housing may be rotated to any horizontal angle with respect to the marine vessel to direct the thrust. The marine propeller propulsion unit may alternatively form a lower part of a marine propulsion unit that comprises an upper part, which is attached to a marine vessel, and the lower part. The lower part may be rotated horizontally with respect to the upper part to direct the thrust. Technical benefits may include high efficiency and performance, in particular as regards maneuverability.

As is known to persons skilled in the art of marine propulsion, a planetary gear comprises a sun gear, a ring gear, a planet carrier and one or more planet gears. The sun gear meshes with a planet gear that meshes with the ring gear. Now, a double-pinion planetary gear comprises an inner planet gear and outer planet gear, wherein the sun gear meshes with the inner planet gear that meshes with the outer planet gear that meshes with the ring gear. Thus, the herein described double-pinion planetary gear comprises a sun gear, a ring gear, a planet carrier, an inner planet gear and outer planet gear, wherein the sun gear meshes with the inner planet gear that meshes with the outer planet gear that meshes with the ring gear.

Optionally in some examples, including in at least one preferred example, the radiuses of the inner planet gear and the outer planet gear are larger than the radius if the sun gear. A technical benefit may include an appropriate torque distribution and an appropriate, and high, gear ratio.

Optionally in some examples, including in at least one preferred example, the radiuses of the inner planet gear and the outer planet gear are essentially equal. A technical benefit may include an appropriate torque distribution and an appropriate, and high, gear ratio. A cost effective design, fewer individual parts required, may involve the inner planet gear and the outer planet gear being equal.

Optionally in some examples, including in at least one preferred example, the marine propeller propulsion unit is configured such that the torque supplied to the front propeller exceeds the torque supplied to the rear propeller. Such a torque distribution is obtainable by means of the double-pinion planetary gear.

Optionally in some examples, including in at least one preferred example, the marine propeller propulsion unit is as a rearward, aka pushing, drive propulsion unit and the torque supplied to the front propeller exceeds the torque supplied to the rear propeller. A technical benefit may include improved efficiency, as has been mentioned.

Optionally in some examples, including in at least one preferred example, a torque ratio between the front propeller and the rear propeller is in the range 1.2:1 to 1.7:1, such as 1.3:1. In the latter case, the torque supplied to the front propeller is 30 percent greater than the torque supplied to the rear propeller during operation.

Optionally in some examples, including in at least one preferred example, the double-pinion planetary gear comprises helical gears. The double-pinion planetary gear may be configured to cancel out any axial forces generated by the double-pinion planetary gear during operation, wherein a technical benefit may include that bearings need to absorb less axial forces, which may lower costs. In addition, helical gears may involve less noise and result in a more compact design.

According to a second aspect of the disclosure, there is provided a use of a double-pinion planetary gear in a marine propeller propulsion unit comprising a front and a rear propeller, wherein a sun gear is connected to an input shaft, a ring gear is connected to the front propeller and a planet carrier is connected to the rear propeller.

According to a third aspect of the disclosure, there is provided a marine vessel comprising the marine propeller propulsion unit. The marine vessel may e.g. be a planing motorboat. The latter may be of a length up to about 60 feet. Typically, such a planing motorboat may have a maximum speed of 25 to 50 knots.

For further possible features of the second and third aspects, as associated advantages, reference is made to the herein provided description of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary and schematic view of a marine propeller propulsion unit and a stern portion of a marine vessel according to an example.
**FIG. 2** illustrates a double-pinion planetary gear.

### DETAILED DESCRIPTION

The detailed description set forth below provides information and examples of the disclosed technology with sufficient detail to enable those skilled in the art to practice the disclosure.

The inventive concept of the present disclosure involves the use of a double-pinion planetary gear in a marine dual propeller propulsion unit. One technical effect that may be obtained is the torque of the front propeller exceeding the torque of the rear propeller, which may result in increased efficiency as compared to the opposite or even torque distribution.

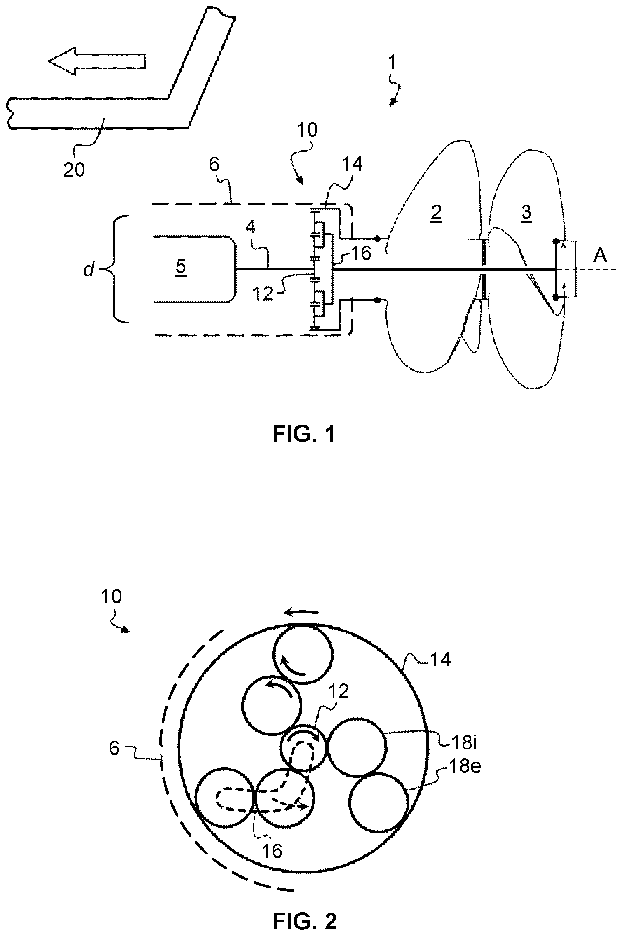

**FIG. 1** shows a marine propeller propulsion unit 1 comprising a first or front and a second or rear propeller, aka a duoprop, and a portion of a marine vessel 20. The marine propeller propulsion unit 1 further comprises a double-pinion planetary gear 10 for driving the front and rear propellers 2, 3 by means of an input shaft 4. As is shown, a sun gear 12 is adapted to be connected to the input shaft 4, a ring gear 14 is adapted to be connected to the front propeller 2, and a planet carrier 16 is adapted to be connected to the rear propeller 3. The double-pinion planetary gear 10 is illustrated in plan view in **FIG. 2****.**

Referring again to **FIG. 1****,** the sun gear 12 may be directly connected to the input shaft 4. Thereby, the sun gear 12 and the input shaft 4 are adapted to rotate at the same velocity. In other words, the sun gear 12 and the input shaft 4 may be rotationally fixed to one another.

Still referring to **FIG. 1****,** the marine propeller propulsion unit 1 may comprise a propulsion motor 5 for driving the input shaft 4. In the present example, the propulsion motor 5 is an electric motor, more precisely one single electric motor. As is shown, the propulsion motor 5 is directly connected to the input shaft 4 such that the propulsion motor 5 and the input shaft 4 are adapted to rotate at the same velocity. The propulsion motor 5 and the input shaft 4 may be rotationally fixed to one another. Further, the propulsion motor 5 may be coaxial with the front and rear propellers 2, 3, as shown. Also, the input shaft 4 and the first and second propeller shafts, illustrated in **FIG. 1****,** may be coaxial. The first or outer propeller shaft that drives the front propeller may be welded to the ring gear 14. The second or inner propeller shaft that drives the rear propeller may be welded to the planet carrier 16.

In the present example, the propulsion motor 5 and the double-pinion planetary gear 10 are of approximately the same outer dimension *d*, as denoted in **FIG. 1****.**

Referring to **FIG. 1** and **FIG. 2****,** the double-pinion planetary gear 10 comprises a sun gear 12, a ring gear 14, a planet carrier 16, an inner planet gear 18i and outer planet gear 18e. The sun gear 12 meshes with the inner planet gear 18i that meshes with the outer planet gear 18e that meshes with the ring gear 14. The planet carrier 16 is free rotating with its assigned propeller. The ring gear 14 is free rotating with its assigned propeller. In the present example, the radiuses of the inner planet gear 18i and the outer planet gear 18e are larger than the radius if the sun gear 12. The radiuses of the inner planet gear 18i and the outer planet gear 18e are essentially equal.

The inner planet gear 18i and the outer planet gear 18e may be equal, such that the same component may be utilized both as inner and outer planet gear 18i, 18e. As shown in **FIG. 2****,** the present double-pinion planetary gear comprises three pairs inner and outer planet gears 18i, 18e. In other examples, there may be four pairs.

As is illustrated in **FIG. 1****,** the double-pinion planetary gear 10 may be oriented with its longitudinal axis A arranged essentially in plane with the vessel 20 and thus essentially horizontally. In other words, during operation, i.e. when the vessel 20 is propelled by the marine propeller propulsion unit 1, the double-pinion planetary gear 10 may be oriented with its longitudinal axis A arranged essentially in plane with the vessel 20.

The double-pinion planetary gear 10 efficiently allows the torque supplied to the front propeller 2 exceeding the torque supplied to the rear propeller 3. Thus, referring to **FIG. 1****,** the marine propeller propulsion unit 1 may be a rearward or pushing drive propulsion unit wherein the torque supplied to the front propeller 2 exceeds the torque supplied to the rear propeller 3. Advantageously, for increased efficiency, a torque ratio between the front propeller 2 and the rear propeller 3 may be in the range 1.2:1 to 1.7:1, such as 1.3:1.

Referring to the example of **FIG. 1****,** the marine propeller propulsion unit 1 may, apart from the propellers 2, 3, comprise no moving part positioned radially outside the ring gear 14 or the outer planet gear 18e. As is illustrated by the dashed line, there may be one single housing 6 containing the propulsion motor 5 and the double-pinion planetary gear 10. The housing 6 may have a radial extension, or diameter, that at least in part is adapted to the radial extension, or diameter, of the propulsion motor 5 and the double-pinion planetary gear 10. For example, there may be a clearance of a few millimeters or a couple of centimeters between the housing 6 and the radially outer one of the propulsion motor 5 and the double-pinion planetary gear 10. In other words, the housing 6 may be compact and may be adapted in shape to the marine propeller propulsion unit 1. The housing 6 may, as schematically illustrated in figure **FIG. 1** and **FIG. 2****,** at least in part be cylindrical in shape. However, other shapes of the housing 6 are conceivable. The entire housing 6 may, at least during operation, be submerged under water.

Even though not illustrated, the double-pinion planetary gear 10 may comprise helical gears and be configured to cancel out any axial forces generated by the double-planet planetary gear 10 during operation. To obtain such cancellation, the helical gears of the sun gear 12 and of the ring gear 14 may have opposite helix hands.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure as defined by the appended claims.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A marine propeller propulsion unit (1) comprising a double-pinion planetary gear (10) for driving a front and a rear propeller (2, 3) by means of an input shaft (4), wherein a sun gear (12) is adapted to be connected to the input shaft (4), a ring gear (14) is adapted to be connected to the front propeller (2), and a planet carrier (16) is adapted to be connected to the rear propeller (3).

2. The marine propeller propulsion unit (1) of claim 1, wherein the sun gear (12) is directly connected to the input shaft (4) such that the sun gear (12) and the input shaft (4) are adapted to rotate at the same velocity.

3. The marine propeller propulsion unit (1) of claim 1 or 2, comprising a propulsion motor (5) for driving the input shaft (4).

4. The marine propeller propulsion unit (1) of claim 3, wherein the propulsion motor (5) is an electric motor.

5. The marine propeller propulsion unit (1) according of claim 3 or 4, wherein the propulsion motor (5) is directly connected to the input shaft (4) such that the propulsion motor (5) and the input shaft (4) are adapted to rotate at the same velocity.

6. The marine propeller propulsion unit (1) according to claim 5, wherein the propulsion motor (5) and the double-pinion planetary gear (10) are of approximately the same outer dimension (d).

7. The marine propeller propulsion unit (1) of any preceding claim, wherein the double-pinion planetary gear (10) comprises a sun gear (12), a ring gear (14), a planet carrier (16), an inner planet gear (18i) and outer planet gear (18e), wherein the sun gear (12) meshes with the inner planet gear (18i) that meshes with the outer planet gear (18e) that meshes with the ring gear (14).

8. The marine propeller propulsion unit (1) of claim 7, wherein the radiuses of the inner planet gear (18i) and the outer planet gear (18e) are essentially equal.

9. The marine propeller propulsion unit (1) of claim 7 or 8, wherein the inner planet gear (18i) and the outer planet gear (18e) are equal.

10. The marine propeller propulsion unit (1) of any preceding claim, wherein the marine propeller propulsion unit (1) is configured such that the torque supplied to the front propeller (2) exceeds the torque supplied to the rear propeller (3).

11. The marine propeller propulsion unit (1) of any preceding claim, wherein the marine propeller propulsion unit (1) is as a rearward drive propulsion unit and the torque supplied to the front propeller (2) exceeds the torque supplied to the rear propeller (3).

12. The marine propeller propulsion unit (1) of claim 10 or 11, wherein a torque ratio between the front propeller (2) and the rear propeller (3) is in the range 1.2:1 to 1.7:1, such as 1.3:1.

13. The marine propeller propulsion unit (1) of any preceding claim, wherein the double-pinion planetary gear (10) comprises helical gears and is configured to cancel out any axial forces generated by the double-pinion planetary gear (10) during operation.

14. Use of a double-pinion planetary gear (1) in a marine propeller propulsion unit (1) according to claim 1, comprising a front and a rear propeller (2, 3), wherein a sun gear (12) is connected to an input shaft (4), a ring gear (14) is connected to the front propeller (2) and a planet carrier (16) is connected to the rear propeller (3).

15. A marine vessel (20) comprising the marine propeller propulsion unit (1) according to any one of claims 1 to 13.

## Patentansprüche

1. Schiffsschrauben-Antriebseinheit (1), umfassend ein Doppelritzel-Planetengetriebe (10) zum Antreiben einer vorderen und einer hinteren Schraube (2, 3) mittels einer Eingangswelle (4), wobei ein Sonnenrad (12) angepasst ist, um mit der Eingangswelle (4) verbunden zu sein, ein Hohlrad (14) angepasst ist, um mit der vorderen Schraube (2) verbunden zu sein, und ein Planetenträger (16) angepasst ist, um mit der hinteren Schraube (3) verbunden zu sein.

2. Schiffsschrauben-Antriebseinheit (1) nach Anspruch 1, wobei das Sonnenrad (12) direkt mit der Eingangswelle (4) verbunden ist, sodass das Sonnenrad (12) und die Eingangswelle (4) angepasst sind, um mit der gleichen Drehzahl zu drehen.

3. Schiffsschrauben-Antriebseinheit (1) nach Anspruch 1 oder 2, umfassend einen Antriebsmotor (5) zum Antreiben der Eingangswelle (4).

4. Schiffsschrauben-Antriebseinheit (1) nach Anspruch 3, wobei der Antriebsmotor (5) ein Elektromotor ist.

5. Schiffsschrauben-Antriebseinheit (1) nach Anspruch 3 oder 4, wobei der Antriebsmotor (5) direkt mit der Eingangswelle (4) verbunden ist, sodass der Antriebsmotor (5) und die Eingangswelle (4) angepasst sind, um mit der gleichen Drehzahl zu drehen.

6. Schiffsschrauben-Antriebseinheit (1) nach Anspruch 5, wobei der Antriebsmotor (5) und das Doppelritzel-Planetengetriebe (10) etwa von der gleichen Außenabmessung (d) sind.

7. Schiffsschrauben-Antriebseinheit (1) nach einem der vorherigen Ansprüche, wobei das Doppelritzel-Planetengetriebe (10) ein Sonnenrad (12), ein Hohlrad (14), einen Planetenträger (16), ein inneres Planetenrad (18i) und ein äußeres Planetenrad (18e) umfasst, wobei das Sonnenrad (12) mit dem inneren Planetenrad (18i) kämmt, das mit dem äußeren Planetenrad (18e) kämmt, das mit dem Hohlrad (14) kämmt.

8. Schiffsschrauben-Antriebseinheit (1) nach Anspruch 7, wobei die Radien des inneren Planetenrads (18i) und des äußeren Planetenrads (18e) im Wesentlichen gleich sind.

9. Schiffsschrauben-Antriebseinheit (1) nach Anspruch 7 oder 8, wobei das innere Planetenrad (18i) und das äußere Planetenrad (18e) gleich sind.

10. Schiffsschrauben-Antriebseinheit (1) nach einem der vorherigen Ansprüche, wobei die Schiffsschrauben-Antriebseinheit (1) konfiguriert ist, sodass das der vorderen Schraube (2) zugeführte Drehmoment das der hinteren Schraube (3) zugeführte Drehmoment übersteigt.

11. Schiffsschrauben-Antriebseinheit (1) nach einem der vorherigen Ansprüche, wobei die Schiffsschrauben-Antriebseinheit (1) eine rückwärtige Antriebseinheit ist und das der vorderen Schraube (2) zugeführte Drehmoment das der hinteren Schraube (3) zugeführte Drehmoment übersteigt.

12. Schiffsschrauben-Antriebseinheit (1) nach Anspruch 10 oder 11, wobei ein Drehmomentverhältnis zwischen der vorderen Schraube (2) und der hinteren Schraube (3) in dem Bereich von 1,2:1 bis 1,7:1, wie beispielsweise 1,3:1, ist.

13. Schiffsschrauben-Antriebseinheit (1) nach einem der vorherigen Ansprüche, wobei das Doppelritzel-Planetengetriebe (10) Schrägzahnräder umfasst und konfiguriert ist, um alle axialen Kräfte, die während eines Betriebs durch das Doppelritzel-Planetengetriebe (10) erzeugt werden, aufzuheben.

14. Verwendung eines Doppelritzel-Planetengetriebes (1) in einer Schiffsschrauben-Antriebseinheit (1) nach Anspruch 1,
umfassend eine vordere und eine hintere Schraube (2, 3), wobei ein Sonnenrad (12) mit einer Eingangswelle (4) verbunden ist, ein Hohlrad (14) mit der vorderen Schraube (2) verbunden ist und ein Planetenträger (16) mit der hinteren Schraube (3) verbunden ist.

15. Schiff (20), umfassend die Schiffsschrauben-Antriebseinheit (1) nach einem der Ansprüche 1 bis 13.

## Revendications

1. Unité de propulsion à hélice marine (1) comprenant un engrenage planétaire à double pignon (10) pour entraîner une hélice avant et une hélice arrière (2, 3) au moyen d'un arbre d'entrée (4), dans laquelle un planétaire (12) est adapté pour être relié à l'arbre d'entrée (4), une couronne (14) est adaptée pour être reliée à l'hélice avant (2), et un porte-satellites (16) est adapté pour être relié à l'hélice arrière (3).

2. Unité de propulsion à hélice marine (1) selon la revendication 1, dans laquelle le planétaire (12) est directement relié à l'arbre d'entrée (4) de sorte que le planétaire (12) et l'arbre d'entrée (4) sont adaptés pour tourner à la même vitesse.

3. Unité de propulsion à hélice marine (1) selon la revendication 1 ou 2, comprenant un moteur de propulsion (5) pour entraîner l'arbre d'entrée (4).

4. Unité de propulsion à hélice marine (1) selon la revendication 3, dans laquelle le moteur de propulsion (5) est un moteur électrique.

5. Unité de propulsion à hélice marine (1) selon la revendication 3 ou 4, dans laquelle le moteur de propulsion (5) est directement relié à l'arbre d'entrée (4) de sorte que le moteur de propulsion (5) et l'arbre d'entrée (4) sont adaptés pour tourner à la même vitesse.

6. Unité de propulsion à hélice marine (1) selon la revendication 5, dans lequel le moteur de propulsion (5) et l'engrenage planétaire à double pignon (10) ont approximativement la même dimension extérieure (d).

7. Unité de propulsion à hélice marine (1) selon l'une quelconque des revendications précédentes, dans laquelle l'engrenage planétaire à double pignon (10) comprend un planétaire (12), une couronne (14), un porte-satellites (16), un satellite intérieur (18i) et un satellite extérieur (18e), dans laquelle le planétaire (12) s'engrène avec le satellite intérieur (18i) qui s'engrène avec le satellite extérieur (18e) qui s'engrène avec la couronne (14).

8. Unité de propulsion à hélice marine (1) selon la revendication 7, dans laquelle le rayon du satellite intérieur (18i) et celui du satellite extérieur (18e) sont sensiblement égaux.

9. Unité de propulsion à hélice marine (1) selon la revendication 7 ou 8, dans laquelle le satellite intérieur (18i) et le satellite extérieur (18e) sont égaux.

10. Unité de propulsion à hélice marine (1) selon l'une quelconque des revendications précédentes, dans laquelle l'unité de propulsion à hélice marine (1) est configurée de sorte que le couple fourni à l'hélice avant (2) dépasse le couple fourni à l'hélice arrière (3).

11. Unité de propulsion à hélice marine (1) selon l'une quelconque des revendications précédentes, dans laquelle l'unité de propulsion à hélice marine (1) est une unité de propulsion arrière et le couple fourni à l'hélice avant (2) dépasse le couple fourni à l'hélice arrière (3).

12. Unité de propulsion à hélice marine (1) selon la revendication 10 ou 11, dans laquelle un rapport de couple entre l'hélice avant (2) et l'hélice arrière (3) se situe dans la plage de 1,2:1 à 1,7:1, tel que 1,3:1.

13. Unité de propulsion à hélice marine (1) selon l'une quelconque des revendications précédentes, dans laquelle l'engrenage planétaire à double pignon (10) comprend des engrenages hélicoïdaux et est configuré pour annuler toute force axiale générée par l'engrenage planétaire à double pignon (10) pendant le fonctionnement.

14. Utilisation d'un engrenage planétaire à double pignon (1) dans une unité de propulsion à hélice marine (1) selon la revendication 1,
comprenant une hélice avant et une hélice arrière (2, 3), dans laquelle un planétaire (12) est relié à un arbre d'entrée (4), une couronne (14) est reliée à l'hélice avant (2) et un porte-satellites (16) est relié à l'hélice arrière (3).

15. Navire (20) comprenant l'unité de propulsion à hélice marine (1) selon l'une quelconque des revendications 1 à 13.
